Europäisches Patentamt

European Patent Office

Office européen des brevets

(11) Publication number: **0 164 809**
**A1**

(12) **EUROPEAN PATENT APPLICATION**

(21) Application number: **85200916.6**

(22) Date of filing: **04.11.82**

(51) Int. Cl.⁴: **C 03 B 5/16**
**C 03 B 5/027, C 03 B 5/18**

(30) Priority: **04.11.81 US 317995**
**04.11.81 US 317996**
**04.11.81 US 317994**

(43) Date of publication of application:
**18.12.85 Bulletin 85/51**

(84) Designated Contracting States:
**BE DE FR GB IT NL**

(60) Publication number of the earlier application
in accordance with Art. 76 EPC: **0 078 715**

(71) Applicant: **Corning Glass Works**
**Houghton Park**
**Corning New York 14831(US)**

(72) Inventor: **Palmquist, Ronald William**
**3228 Livesay Road**
**Horseheads New York N.Y. 14845(US)**

(72) Inventor: **Carley, Harold James**
**10, Orchard Drive**
**Corning New York N.Y. 14830(US)**

(74) Representative: **Boon, Graham Anthony et al,**
**Elkington and Fife High Holborn House 52/54 High**
**Holborn**
**London, WC1V 6SH(GB)**

(54) Method of protecting or shielding a device from oxygen within a glass-melting furnace.

(57) A method is disclosed for protecting or shielding a device such as an electrode (130, 130', 130") within a glass-melting furnace (110), the device (130, 130', 130") being maintained at elevated temperatures above an oxidizing temperature thereof. The device (130, 130', 130") is dipped into the molten glass (112) to a selected immersion level (D2) along a selected length thereof susceptible to temperatures in excess of the oxidation temperature, and maintained at the immersion level (D2) for a sufficient time to allow the molten glass to adhere to and coat the device over said selected length. The device with its adhered molten glass coating (140) is withdrawn from the molten glass at least to a selected operating level (D1) above the immersion level (D2) such that the device is shielded from oxidizing agents along the selected length.

FIG. I

EP 0 164 809 A1

## METHOD OF PROTECTING OR SHIELDING A DEVICE FROM OXYGEN WITHIN A GLASS-MELTING FURNACE

This invention relates to glass-melting furnaces. More particularly, the invention relates to a method of protecting or shielding a device from oxygen with such a furnace, and to a device which is so protected or shielded. In an embodiment of the invention the said devices are electrodes or other devices inserted at selected locations through the batch of a vertical glass-melting furnace.

In an electric glass-melting furnace, electrodes are coupled to a source of electric power and placed in contact with a bath of molten glass. Electrical energy flows between the electrodes and dissipates energy in the form of Joule heating in the molten glass for melting a blanket of glass-forming batch materials deposited on and floating on top of the bath. Such electrodes may be inserted through openings in wall portions of the furnace, as in conventional furnaces, or may be directly placed in contact with the molten glass from above or through the layer of batch floating thereon, as in the case of a cold crown electric melter. Further details of such a furnace are to be found in EP-A-0078715 from which the present application is divided and to which attention is directed.

In many glass-melting furnaces molybdenum (moly) is used as the preferred electrode material. However, because moly has a relatively low oxidation temperature of about 500°C, complex protection devices are required to shield the electrodes from deterioration by contact with oxygen trapped in the glass-forming batch materials

-2-

and/or other corrosive agents therein. Such devices include conventional water-cooled stainless steel sleeves or specially fabricated glass contact refractory sleeves which surround the electrode. These devices are expensive and somewhat short lived. For example, water cooling tends to dissipate energy intended for glass-melting purposes and has a deleterious effect on melting efficiency and glass quality. Protection devices tend to be heavy and cumbersome and are not easily adjusted or replaced, thereby diminishing their versatility. Glass quality may also be affected by contamination of the glass by materials forming the protective devices, and these materials eventually corrode and become mixed with the glass in the furnace.

A preferred embodiment of the aspect of the present invention uses a relatively inexpensive and long-lived system for directly immersing moly rods into a bath of thermoplastic material. The moly rods are protected from oxidation without complicated peripheral apparatus. The system requires no cooling, and thus, energy utilization is enhanced. Further, the moly rods can be supported in a relatively simple holder thereby facilitating adjustment and replacement.

It should be realized that the present invention is also applicable to other devices which may be directly immersed in a bath of molten glass as, for example, stirring devices, oxygen sensors and thermocouples. Also other oxidizable materials are contemplated, for example tungsten, rhenium and columbium, as long as the oxidizable portions thereof are protected in the manner set forth herein. However, in order to simplify the disclosure herein, reference will mainly be made to the advantages of the present invention relative to moly electrodes. It is intended, however, that such other alternatives are to be considered part of the invention.

The present invention provides a method of protecting or shielding a device from oxygen within a glass-melting furnace containing a supply of molten glass, the device being maintained at elevated temperatures above an oxidizing temperature thereof comprising the steps of: dipping the device into the molten glass to a selected immersion level along a selected length thereof susceptible to temperatures in excess of the oxidation temperature, maintaining the device at the immersion level for a sufficient time to allow the molten glass to adhere to and coat the device over said selected length, and withdrawing the device and the adhered molten glass coating same from the bath at least to a selected operating level above the immersion level such that the device is shielded from oxidizing agents along the selected length.

The invention further provides a device for immersion into a supply of glass in a molten state, said device being capable of operating in excess of an oxidation temperature thereof, comprising: an oxidizable rod of a selected length having a tip end and extending axially therefrom to at least a support portion thereof, said rod being oxidizable in the presence of oxygen and at temperatures necessary to melt the glass, said rod being locatable in said furnace and partially submersible in the molten glass from the tip end to at least near the support portion thereof, and a relatively thin coating of vitreous material adhered to a selected portion of the rod between the tip end and the support portion, said vitreous coating being relatively highly viscous at temperatures at least near said oxidation temperature of said rod and remaining adhered to said rod, and said rod being shielded from oxygen by said coating where the temperature of said rod is in excess of the oxidation temperature thereof.

In the accompanying drawings:

Figure 1 is a fragmented schematic side sectional illustration of an electrode (including a phantom view thereof) immersed in a glass-melting furnace being operated in accordance with the method of the present invention;

Figure 1A is a schematic diagram illustrating an inclined electrode;

Figure 2 is a schematic illustration of an alternative embodiment of an electrode constructed in accordance with the present invention, using a graded glass shielding device; and

Figure 3 shows another embodiment wherein the electrode has an axial opening into which a purge fluid is introduced.

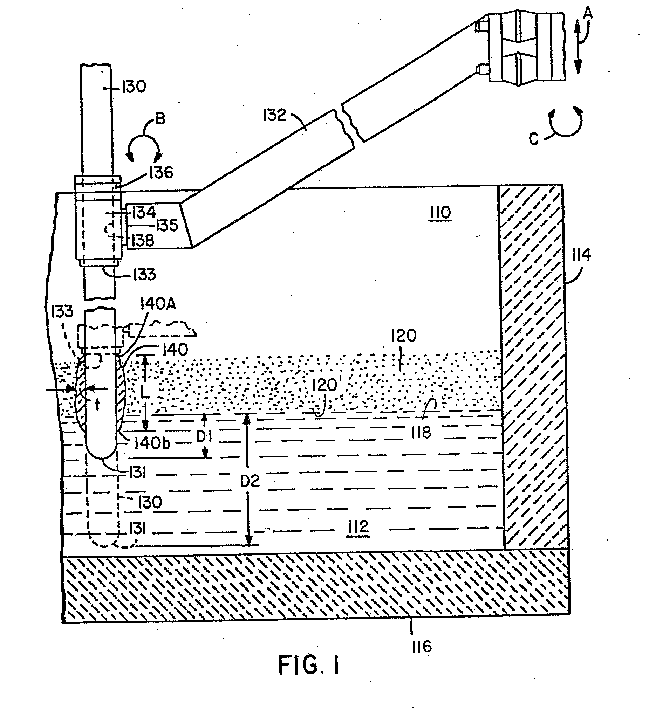

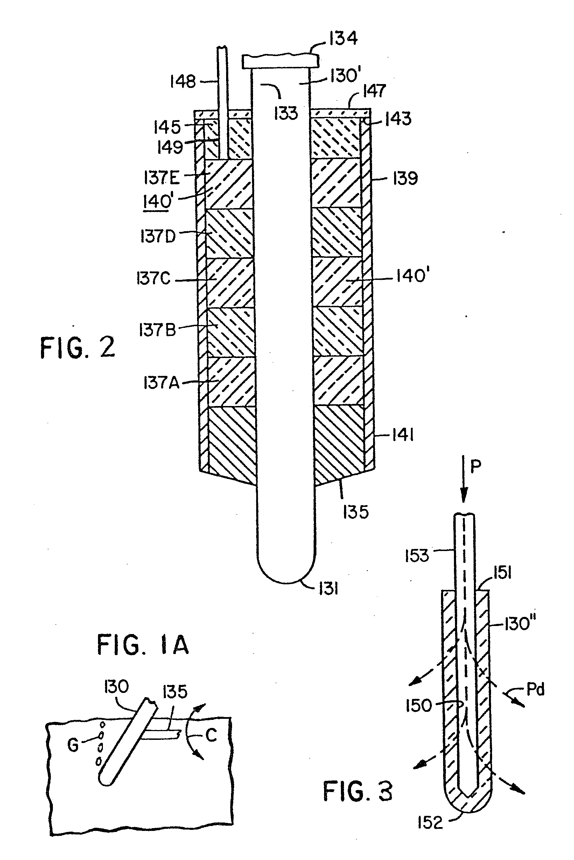

Figure 1 illustrates an embodiment to the present invention wherein a vertical electric glass-melting furnace 110 is illustrated in fragmented side section. The furnace 110 contains a bath of molten thermoplastic material such as glass 112. The furnace 110 includes an upstanding side wall 114 and a bottom wall 116. The bath of molten glass 112 has an upper free surface 118 upon which there is deposited a quantity of glass-forming materials or batch 120. The batch 120 is in the form of a floating blanket which insulates the free surface 118 of the batch 112 and retains heat within the furnace 110. The molten glass 112 is initially melted by conventional means including a gas burner not shown. Thereafter, continuous melting takes place by means of a plurality of current-carrying electrodes 130 inserted into the bath 112. Only one electrode 130 is shown in order to simplify the drawing.

Each electrode 130 may be carried in a collar 134 secured to a support arm structure 132. The collar 134 has an adjustment ring structure 136 for allowing the electrode 130 to slide up and down within an aperture 138 in said collar 134. The support arm 132 is shown fragmented and is suitably supported exterior of the furnace 110 by a frame structure (not shown) which allows the support arm 132 to move upwardly and downwardly in the direction of the double headed arrow A in Figure 1. Support arm 132 may be joined to collar 134 by sleeve 135 which allows individual placement of electrode 130 (see curved double headed arrow B). Also, support arm may be moved circumferentially about its frame structure by means not shown (in the direction into and out of the page as illustrated by double headed arrow C).

Although other aspects and embodiments are described herein, the present invention is primarily concerned with protecting the electrode from its tip 131 to a point therealong at 133 just below the collar 134. The electrode 130 is normally immersed so that its tip end 131 extends into the bath 112 to a depth D1, referred to as the operating level, as measured from the free surface 118. In the phantom drawing, superimposed on the solid line drawing in Figure 1, electrode 130 is shown with its tip 131 immersed to a second or dipping level D2 as measured from the free surface 118 of the bath of glass 112.

This embodiment of the invention operates as follows: A portion of the electrode 130 from the tip 131 to near the point 133 is submerged or dipped into the bath 112. The electrode is held submerged with its tip 131 at the depth D2 for several minutes until it becomes heated sufficiently, such that, the glass 123 becomes adhered to the electrode 130 at least along a portion thereof submerged below the free surface 118 (i.e. from tip 131 to near point 133). After sufficient time has elapsed for the molten glass 112 to adhere to the elctrode 130, it is partially withdrawn from the furnace 110 up to the operating level D1. Adhered glass shown at reference numeral 140 forms a coating 140 having respective upper and lower edges 40A-40B. The coating 140 covers or coats a selected length L of the electrode 130 as a relatively thin film of thickness t thereby blocking oxygen infiltration and protecting the electrode from deleterious oxidation. The thickness t of the coating 140 is dependent upon the temperature and viscosity characteristics of the glass 112. The adhered glass coating 140 becomes partially solidified or highly viscous due to the fact that the temperature of the electrode 130 drops to near a solidification temperature thereof as one moves away from the tip 131. Also, the batch 120 surrounding the electrode 130 is relatively cool and insulates the coating 140 from the high heat of furnace 110.

The depth at which the electrode 130 is operated may vary about the depth of D1, but for purposes of illustration herein, the operating level D1 of the electrode 130 remains substantially constant once it is determined. External cooling of the electrode 130 is not generally necessary since portions thereof above upper edge 140A which are exposed to ambient oxygen are cooled by natural convection to below the oxidation temperature of the moly. Portions of the electrode 130 below a lower edge 140B of the coating 140 are protected from oxidation by immersion in the molten glass 112.

The present invention has most significant applications for batch electrodes or electrodes which penetrate a batch blanket in cold crown vertical melters. In principle, however, there is no reason why such an electrode could not be used wherever electrodes are presently used in furnaces (e.g. through the side walls 114 or bottom wall 116) as long as some form of protection is provided to prevent furnace leaks.

This aspect of the present invention affords considerable savings over conventional protective devices. Further, since conventional devices are typically water cooled, there are significant energy savings available resulting in higher melting efficiencies.

For certain glasses the tip 131 of the electrode 130 should be placed as close as possible to an underside 120' of the batch 120 near free surface 118. For other glasses more efficient melting takes place when the tip 131 of the electrode 130 is placed further down in the molten glass 112. It can be readily appreciated that these adjustments are more easily accomplished by using a bare rod concept herein described. Since the electrode structure formed of a cylindrical moly rod is significantly lighter without the stainless steel water-cooled jacket of the prior conventional furnaces, adjustment of operating level D1 of the electrode 130 is uncomplicated. Thus, more efficient melting can be achieved because the location of the tip end 131 of the electrode 130 can be fine tuned to best suit melting characteristics of the particular glass being melted. The operating level D1 of the electrode 130 may be changed by simply moving the support arm 132 upwardly and/or downwardly from exterior the furnace 110 or by moving the electrode in support collar 134. Further, the electrode 130 may be reciprocated between levels D1 and D2 to periodically replenish the coating 140.

The outer surface of the elctrode 130 may be treated prior to immersion in the bath 112 in order to protect the moly and to allow for more adequate adhesion of the glass layer 140 to the electrode 130. A refractory substance such as a flame sprayed aluminium oxide sold under the trademark ROKIDE appears to reduce oxygen contamination and has a beneficial effect on adhesion of the glass layer 140 to the electrode 130. A coating of chromium oxide over the surface of electrode 130 may also enhance adhesion of the glass coating 140. It has been found that slight oxidation of the electrode 130 itself may be helpful to glass adhesion. A coating of molybdenum disilicide may also be used to protect the electrode 130 from oxidation.

Sometimes gases are evoled during the glass melting process (see Figure 1A). If such gases come into contact with the electrode 130, oxidation or corrosion thereof may occur. As a further precaution against oxidation, therefore, the electrode 130 may be inclined about the vertical by means of sleeve connection 135 (see double headed arrow B). Gas bubbles evolved will tend to float vertically upward and away from electrode 130.

In Figure 2 there is illustrated an alternative embodiment of this aspect of the present invention wherein electrode 130' is pre-shielded with a protective glass coating 140'. The electrode 130' has a moly collar 135 located near the tip end 131. The collar 135 may be threaded, shrink fitted or bolted onto the electrode 130'. A plurality of different glass-forming materials, in the form of unconsolidated cullet or solid glass annular rings or annular cylinders 137A-137E, may be located axially of the electrode 130' along a selected length L' to grade the protective coating 140' thereof. If glass cullet is utilized for the rings 137A-137E, an alumina tube 139 of sufficient length may be joined at a lower end 141 to the collar 135 for containing the materials therein. A fused silica material such as sold under the trademark VYCOR could be used for tube 139. At an upper end 143 of the tube 139, an annular refractory cap or plug 145 may be sleeved over the rod 130' and located within the tube 139 to close a space containing the protective coating 140' therein. The plug 145 may be a packing material such as FIBERFRAX® Rope. Additionally, a readily available extrudable silicone sealant 147 such as Dow Corning RTV 732 could be placed over refractory cap 145. A purge line 148 may be fitted through opening 149 in plug 145 and seal 147 for the introduction of a purge gas P interior the tube 139. A purge gas P protects the moly electrode during startup before the cullet rings 137A-137E melt. Thereafter, the melted material protects electrode from oxygen contamination.

The electrode 130' illustrated in Figure 2 might be suitably clamped to the support collar 134 and slowly lowered through the batch 120 and into the molten glass 112. At such time, the various layers of protective materials 137A-137E would become melted or softened and adhere to the electrode 130'. It should be realized that, as in the embodiment of Figure 1, the protective layer 140 experiences a temperature gradient when placed in service. The temperature of the electrode 130' decreases as one moves axially therealong from the tip 131 to the point 133 near where it is supported by collar 134. Different glass compositions may be used for the rings 137A-137E forming protective layer 140', each having a different softening and annealing point. Each will be susceptible to some viscous flow at various temperatures. By tailoring the compositions of rings 137A-137E from relatively hard glasses, for the lowest protective layer 137A near the tip 131, to relatively soft glasses at the upper end of the protective layer 133, each will exhibit the proper characteristics at its anticipated operating temperature. By grading the glasses as hereinabove set forth, there is less likelihood of thermally shocking the protective layer 140' over the temperature gradient therealong. Further, because the batch layer 120 acts as an insulator from the high heat generated within the bath of molten glass 112, the protective coating 140' will remain relatively intact even though it is softened.

The following Example is thought to set forth a suitable embodiment of a graded protective coating 140' beginning with the lower ring 137A or relatively softer glass and progressing to the uppermost ring 137E of relatively harder glass as follows:

137A - Borosilicate (Corning Code 7740) (8" long, 200mm)

137B - Alkali Barium Borosilicate (Corning Code 7052) (7" long, 178mm)

137C - Borosilicate having a high boric oxide content as set forth in U.S. Patent 2,106,744

137D-137E - Borosilicate glass as in 137C mixed with increasing amounts of anhydrous boric Oxide from 20 to 40% respectively (7" long each, 178mm)

Rings 137A-137E - 100 mesh cullet

Tube 139 - VYCOR brand tubing Total length of coating - approximately 36" (915mm).

The present invention also contemplates the use of a borosilicate glass tube 139 such as Corning Code 7052 having an expansion comparable with the moly.

The tube 139 would be sealed directly to the electrode 130' without the cullet fill 137A-137E.  The electrode 130' should be preheated in order to prevent thermal shock.

An advantage of the arrangement illustrated in Figure 2 is that electrode 130' may be prefabricated for quick insertion into the furnace 110 without any other preparation.  The tube 139 not only contains therewithin the protective layer 140' (if in granular form), but also provides for some protection of the protective layer 140' at least until it is consolidated during operation of the furnace 110.  The moly collar 135 would normally be located below the level of the free surface 118 of the bath 112 shown in Figure 1, and thus, is protected from oxidation by its immersion in the molten glass 112.

In Figure 3 there is illustrated yet another embodiment of the present invention.  An electrode 130" may have an axial bore 150 drilled or formed therein. The bore 150 extends generally lengthwise thereof from an open upper end 151 to near tip 152 thereof.  A purge line 153 may be located in the open end 151 and a purge fluid P introduced therein.  At elevated temperatures, hydrogen or other gases inert with respect to moly will diffuse therethrough as shown by dotted arrow Pd.  This embodiment, when dipped according to the invention is additionally protected from oxidation without undue energy and materials costs.

CLAIMS:

1.  A method of protecting or shielding a device from oxygen within a glass-melting furnace containing a supply of molten glass, the device being maintained at elevated temperatures above an oxidizing temperature thereof comprising the steps of: dipping the device into the molten glass to a selected immersion level along a selected length thereof susceptible to temperatures in excess of the oxidation temperature, maintaining the device at the immersion level for a sufficient time to allow the molten glass to adhere to and coat the device over said selected length, and withdrawing the device and the adhered molten glass coating same from the bath at least to a selected operating level above the immersion level such that the device is shielded from oxidizing agents along the selected length.

2.  A method as claimed in claim 1, wherein the device comprises at least one of an electrode, a thermocouple, an oxygen sensor and a stirrer.

3.  A method as claimed in claim 1 or 2, further comprising the step of electrically energizing the electrode for conducting electrical currents through the bath of molten glass.

4.  A method as claimed in claim 3, wherein evolved gases occur adjacent the energized electrode, and further including the step of inclining the electrode relative to a vertical direction in order to minimize contact of the evolved gas and the electrode.

5.  A method as claimed in any preceding claim, further comprising the step of precoating the device with an annular glass coating at least along the selected length.

6.    A method as claimed in claim 5, wherein the annular glass coating is of at least one vitreous material which surrounds the device along the selected length.

7.    A method as claimed in claim 6, wherein the annular glass coating comprises a plurality of vitreous materials having different viscosity characteristics, from a relatively hard glass to a relatively soft glass, said materials being located about the device in axially located annular bands from the respective relatively hard to soft glasses, beginning near a portion of the device exposed to relatively higher temperatures for avoiding thermal shock and spalling of the vitreous materials away from the device.

8.    A method as claimed in claim 6, wherein the vitreous material is initially in granular form and the method further comprises the step of containing the granular vitreous material in position about the device until said vitreous material becomes softened and viscously adhered to the device.

9.    A method as claimed in claim 8, further comprising the step of sealing the contained granular material against ambient atmosphere.

10.    A method as claimed in claim 8, further comprising the step of introducing a purge gas through the granular material ajdacent the exterior of the device.

11.    A method as claimed in claim 1, further comprising the step of diffusing a purge gas through the device from the interior to the exterior thereof.

12.    A device for immersion into a supply of a glass in a molten state, said device being capable of operating in excess of an oxidation temperature thereof, comprising:

an oxidizable rod of a selected length having a tip
end and extending axially therefrom to at least a
support portion thereof, said rod being oxidizable in
the presence of oxygen and at temperatures necessary
to melt the glass, said rod being locatable in said
furnace and partially submersible in the molten glass
from the tip end to at least near the support portion
thereof, and a relatively thin coating of vitreous
material adhered to a selected portion of the rod
between the tip end and the support portion, said
vitreous coating being relatively highly viscous at
temperatures at least near said oxidation temperature
of said rod and remaining adhered to said rod, and
said rod being shielded from oxygen by said coating
where the temperature of said rod is in excess of the
oxidation temperature thereof.

13. A device as claimed in claim 12, wherein the
coating comprises a semi-solidified mass of the supply
of glass forming a viscous film about the electrode
from at least the upper free surface of the glass to
at least a portion of the electrode which has a
temperature below the oxidation temperature of the
device.

14. A device as claimed in claim 12, wherein the
coating comprises a plurality of annular formations
of vitreous materials surrounding the device continuously along the selected length, said vitreous
materials being formed of substances having viscosity
characteristics successively ranging from a relatively
high viscosity near the electrode tip to a relatively
lower viscosity remote from said tip.

15. A device as claimed in claim 14, further comprising
a lower support means secured to the device near the tip

-15-

said support means engaging the high viscosity annular formation for supporting the coating against viscous flow thereof in the direction of the tip.

16. A device as claimed in claim 15, further comprising an annular containment tube surrounding the device coating along the selected length thereof said tube being secured at one end to the support means for preventing flow of the coating away from the device.

17. A device as claimed in claim 16, wherein the annular tube is formed of fused silica or alumina.

18. A device as claimed in any one of claims 12 to 17, further comprising means for introducing a purge gas into the same for shielding the device from deleterious ambience.

FIG. 1

FIG. 2

134
148
130'
133
147
145
149
143
137E
140'
139
137D
137C
140'
137B
141
137A
135
131

FIG. 1A

130    135
G    C

FIG. 3

P
153
151
130"
150    Pd
152